# EUROPEAN PATENT APPLICATION

(11) **EP 4 012 893 A1**
(43) Date of publication of application: **15.06.2022**
(21) Application number: 20213078.7
(22) Date of filing: 10.12.2020
(51) Int. Cl.: H02K 1/27, H02K 1/02, H02K 15/03

(54) **ELECTRIC MACHINE**

(71) Applicant: Volvo Car Corporation, 40531 Göteborg (SE)
(72) Inventor: Tokat, Alexandra, 41263 Göteborg (SE); Bergsro, Kim, 417 64 Göteborg (SE)
(74) Representative: Nederlandsch Octrooibureau

(57) **Abstract**

An electric machine for a vehicle comprises a stator, and a rotor comprising a plurality of poles. Each pole comprises a first flux barrier; and a second flux barrier adjacent to and radially outward from the first flux barrier. Each of the first flux barrier and the second flux barrier comprises a central ferrite magnet in a central duct, and first and second rare earth magnets on each side of the ferrite magnet in outer ducts extending from each end of the central duct at an angle.

## Description

### TECHNICAL FIELD

This is related to an electric machine comprising a rotor having a multibarrier design, preferably a permanent magnet assisted reluctance machine, adapted for use in hybrid, plug-in hybrid and electric vehicles.

### BACKGROUND

A permanent magnet synchronous reluctance machine is an AC motor in which the rotation of the shaft is synchronized with the frequency of the AC Supply current. A magnetic field which rotates is generated in the stator, and the rotor with permanent magnets turns with the rotating electrical field of the stator. In this way, the rotor and the stator are said to be in synchronization.

Typically permanent magnet electric machines used in the automotive industry contain rare earth permanent magnets, such as neodymium-iron-boron (NdFeB). These allow high performance at a wide temperature range due to their strong magnetic field allowing for enhanced torque in the motor. Other magnets, such as ferrite magnets are used in some applications, though these are less strong and more prone to demagnetization.

Rotors can have different layouts of the permanent magnets. In some rotors, the magnets are arranged substantially in parallel with the outer circumference of the rotor, while others are arranged in a V-shape or arcuate shapes. In these configurations, the magnets may be arranged with magnetic layers arranged one above the other.

### SUMMARY

According to a first aspect of the invention, an electric machine for a vehicle comprises a stator, and a rotor comprising a plurality of poles. Each pole comprises a first flux barrier; and a second flux barrier adjacent to and radially outward from the first flux barrier. Each of the first flux barrier and the second flux barrier comprises a central ferrite magnet in a central duct, and first and second rare earth magnets on each side of the ferrite magnet in outer ducts extending from each end of the central duct at an angle.

Such a rotor using multiple flux barriers, each with central ferrite magnets and outer rare earth magnets provides an electric machine with increased torque density while being mechanically robust at high speeds and remaining reasonable in costs by using the rare earth magnets as assisting magnets.

According to an embodiment, the first and second rare earth magnets are neodymium-iron-boron (NdFeB) magnets and/or samarium-cobalt (SmCo) magnets. Using such rare earth magnets as the assist-magnets provides sufficient magnetic force while minimizing costs and environmental impact by minimizing the use of the rare earth magnets.

According to an embodiment, the central ferrite magnet and the first and second rare earth magnets have the same demagnetization point. Optionally, this can be through setting the thickness of each magnet. By choosing or forming magnets with the same demagnetization point, higher currents can be used in the machine allowing for higher performance, as the maximum current does not have to be limited for magnets more sensitive to demagnetization (e.g., thinner ferrite magnets).

According to an embodiment, each of the central and first and second rare earth magnets is a rectangular prism. Shaping each magnet and/or duct as a rectangular prism and/or with a rectangular cross-section can mean the ducts and/or magnets are easier to form or cut (than, e.g., curved magnets/ducts) and that the magnets can also more easily be inserted into the ducts in the rotor. Additionally, ducts with rectangular cross-sections can ensure the magnets stay in place once inserted. Optionally, there can be very little clearance on each of the major sides between the magnet and the duct to securely hold the magnet in place.

According to an embodiment, the outer ducts for the rare earth magnets connect with the central duct for the ferrite magnet. This can work well for efficient formation of the ducts and providing air gaps between the magnets. Optionally, the outer ducts and/or rare earth magnets could taper somewhat from a side connecting to the central duct/magnet to the outer side. Such tapering can ensure that magnets stay where placed within the rotor. Further optionally, the outer ducts are symmetric along a centreline running perpendicular to the central duct.

According to an embodiment, the central ferrite magnet is thicker than the rare earth magnets. By making the central ferrite magnet thicker than the rare earth magnets, the central ferrite magnet can provide a main source for magnetic flux linkage, allowing for use of the more expensive rare earth magnets as simply assisting magnets. This decreases the volume needed of the rare earth magnets and therefore the overall costs of the rotor while maintaining high performance.

According to an embodiment, the electric machine further comprises a third flux barrier adjacent to a radially outward from the second flux barrier. Optionally, the machine could further comprise a fourth flux barrier adjacent to a radially outward from the third flux barrier. Each of the third flux barrier and the fourth flux barrier would comprise a central ferrite magnet in a central duct, and first and second rare earth magnets on each side of the central ferrite magnet in outer ducts extending from each end of the central duct at an angle. In further embodiments, the machine may comprise even more flux barriers, for example, five or six.

According to an embodiment, the machine further comprises a flux barrier comprising only one type of magnet. Such a flux barrier could be shaped the same as those with the central ferrite magnet and rare earth magnets, with a central duct and side ducts extending at an angle. The flux barrier may, for example, include only ferrite magnets, thereby providing magnetic strength without the expensive rare earth magnets. Such a single magnet type flux barrier may be located between the flux barriers formed of ferrite and rare earth magnets, or may be on one side. In further embodiments, whole poles may be formed of such flux barriers with other poles formed of the flux barriers comprising a central ferrite magnet and side rare earth magnets. Such configurations could be chosen dependent on system performance requirements and availability of particular magnets.

According to a further aspect of the invention, a method of forming an electric machine comprises forming a rotor with a central duct and two outer ducts connecting to and extending radially outward from the ends of the central duct at an angle toward an outer circumference of the rotor, each of the central and outer ducts having a rectangular cross-section; inserting a ferrite magnet in the central duct; and inserting rare earth magnets in each of the outer ducts. Such a method provides an efficient and affordable way of forming a rotor for an electric machine which still provides high performance. By forming the magnets (and ducts) to have a rectangular prism shape with rectangular cross-sections (or at least not arcuate or bent), manufacture of both the magnets and ducts is much easier, more efficient and therefore less costly. Using thicker ferrite magnets 22 to provide main source for magnetic flux linkage allows for use of the expensive rare earth magnets as simply assisting-magnets, thereby decreasing the volume needed of the rare earth magnets and the overall costs of the rotor while maintaining high performance.

According to an embodiment, the step of forming a rotor with a central duct and two outer ducts comprises forming the central duct thicker than the two outer ducts. Such a configuration can accommodate a thicker central ferrite magnet, making it less prone to demagnetization and provide the required magnetic strength which reducing overall costs.

According to an embodiment, the method further comprises forming, radially outward from the central duct and two outer ducts, a second central duct and two second outer ducts connecting to and extending radially outward from the ends of the second central duct at an angle toward an outer circumference of the rotor, each of the second central and second outer ducts having a rectangular cross-section; inserting a second ferrite magnet in the second central duct; and inserting second rare earth magnets in each of the second outer ducts. Optionally, a third central duct and outer ducts with ferrite and rare earth magnets could be formed. Forming multiple flux barriers, each with a central ferrite magnet and outer rare-earth element magnets assisting, results in an electric machine with increased torque density and a design which is more mechanically robust at high speeds.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1A is a cross-sectional view of a schematic electric machine.
FIG. 1B is a cross-sectional view of a pole from the electric machine of Fig. 1A.
FIG. 2 is cross-sectional view of a second embodiment of a schematic electric machine.

### DETAILED DESCRIPTION

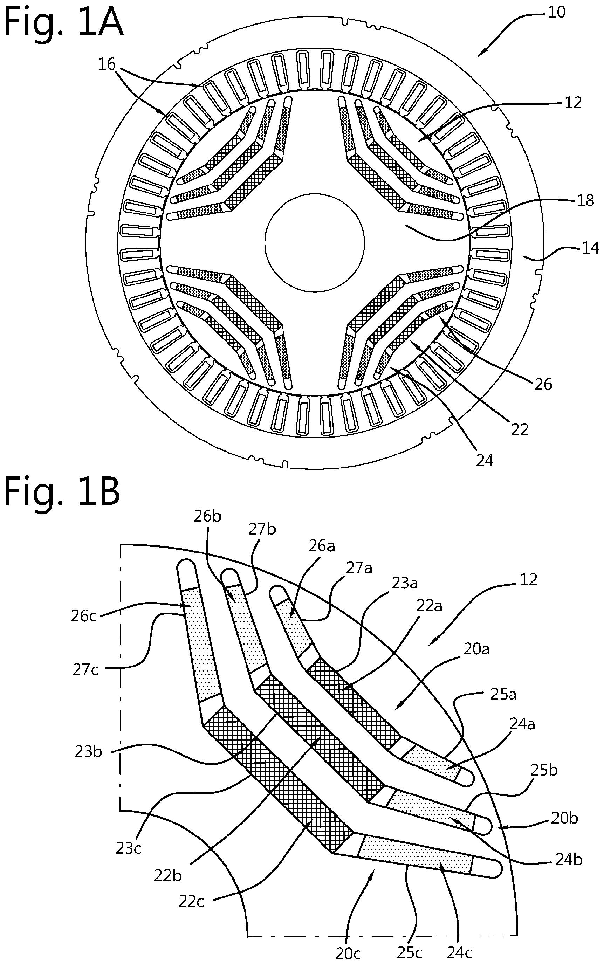

FIG. 1A is a cross-sectional view of a schematic electric machine 10, and FIG. 1B is a cross-sectional view of a pole 12 from the electric machine 10. Electric machine 10 includes stator 14 with winding 16; and rotor 18 with poles 12. While rotor 18 is shown with four poles, different rotors could have more or fewer poles depending on system and torque requirements.

Each pole 12 of rotor 18 (shown in Fig. 1A) includes a plurality of flux barriers. In the embodiment shown, each pole 12 of rotor 18 includes three flux barriers 20. Each flux barrier 20 includes three magnets, a central magnet 22 in a central duct 21 and two outer magnets 24, 26 in outer ducts 25, 27. The central magnet is a ferrite magnet, and is positioned perpendicular to a radius line of rotor 18 near an outer periphery of rotor 18. Outer magnets 24, 26 each extend at an angle from the ends of central magnet 22 (with an air gap between the ends of magnets) toward the circumference of rotor 18 and away from central magnet. The angle is generally an obtuse angle with ducts 25, 27 extending nearly to the circumference of rotor 18, though the specific placement and angle can vary depending on the number of flux barriers, the positioning of the flux barrier, etc. The outer magnets 24, 26 are rare earth magnets, for example neodymium-iron-boron (NdFeB) or samarium-cobalt (SmCo) magnets.

Magnets 22, 24, 26 are all held in place in ducts 23, 25, 27 in rotor 18. Central magnet 22 is held in place by central duct 23, which is generally a rectangular prism shape. Outer magnets 24, 26 are held in outer ducts 25, 27, which are also generally a rectangular prism shape, though could differ and taper somewhat toward the outer edges. Each of outer ducts 25, 27 connect to the ends of central duct 23. Ducts 23, 25, 27 are typically sized to be about the (cross-sectional) thickness of the magnet the respective duct will receive with very little clearance on each of the major sides. The cross-sectional length of the duct is typically longer than the magnet it will receive to provide the air spaces at the ends separating the outer magnets 24, 26 from central magnet 22, as well as provide space on the ends of each of outer magnets 24, 26.

In each flux barrier 20, central ferrite magnets 22 are thicker (with more volume) than outer, rare earth magnets 24, 26. This helps both with demagnetization issues (particularly with the ferrite magnets), as making the ferrite magnets thicker decreases the chance of demagnetization. This also allows for smaller rare earth magnets 24, 26, thereby decreasing the overall cost by requiring less rare earth magnet volume. The thickness of each magnet can be set such that all have the same demagnetization point (i.e., the maximum current the machine could endure without being demagnetized) by setting the thickness of the central ferrite magnet 22 to match the same demagnetization point of the rare earth magnets 24, 26. This allows for use of higher currents (allowing for higher performance) as the maximum current does not have to be limited, which would be the case in using thinner ferrite magnets.

As can be seen in the close-up view of one pole 12 in Fig. 1B, each flux barrier 20a, 20b, 20c includes three magnets. The first flux barrier 20a consists of central magnet 22a with outer magnets 24a and 26a positioned respectively in ducts 23a, 25a and 27a. Second flux barrier 20b is positioned adjacent to and radially outward from first flux barrier 20a; and includes central magnet 22b and outer magnets 24b, 26b. Third flux barrier 20c is positioned adjacent to and radially outward from second flux barrier 20b, and includes central magnet 22c and outer magnets 24c, 26c. Ducts and magnets are typically arranged symmetric along a centreline running perpendicular to the central duct 23 and central ferrite magnets 22.

As can be seen, flux barriers 20a, 20b, 20c increase in size from the radially outer-most barrier to the radially innermost barrier, with first flux barrier 20a being the smallest (with smaller magnets) to the largest barrier, third flux barrier 20c with the largest magnets 22c, 24c, 26c.. While three flux barriers are shown, other embodiments could have more or fewer flux barriers, for example, 2-5. Magnets of each flux barrier 20a, 20b, 20c are arranged to be parallel with the respective similar magnets of the other flux barriers in each pole 12. First flux barrier 20a is arranged to be as close as possible to the outer circumference of rotor 18, while still allowing for the rigidity of the rotor to be preserved.

In use, a magnetic field rotates in the stator 14 winding 16. The permanent magnets 22, 24, 26 in the rotor 18 lock in with the rotating magnetic field of the stator 14, resulting in the rotor 18 rotating with the magnetic field. The central ferrite magnets 22 are the main source for magnetic flux linkage, with the rare earth outer magnets 24, 26 assisting with the linkage.

In prior art systems, typical synchronous reluctance machines conventionally had parabolic flux barriers which optimized the saliency, but compromised the structural integrity for high speed applications (such as electric vehicle). The configuration shown in the multi-barrier electric machine of Figs. 1A-1B, with multiple flux barriers, each with a central ferrite magnet 22 and outer rare-earth element magnets 24, 26 assisting, results in an electric machine with increased torque density and a design which is more mechanically robust at high speeds. The design shown can increase the torque more than three times compared to a conventional prior art ferrite assisted machine and over double compared to a machine with a similar configuration but only using ferrite magnets.

The use of thicker central ferrite magnets 22 reduces the overall costs, while the smaller rare earth magnets on the sides ensure that required magnetic strength is available, particularly for high speed performance. By forming the magnets (and ducts) to have a rectangular prism shape with rectangular cross-sections (or at least not arcuate or bent), manufacture of both the magnets and ducts is much easier, more efficient and therefore less costly. Using thicker ferrite magnets 22 to provide main source for magnetic flux linkage allows for use of the expensive rare earth magnets as simply assisting-magnets, thereby decreasing the volume needed of the rare earth magnets and the overall costs of the rotor while maintaining high performance. Such a configuration has significantly higher torque density than a conventional synchronous reluctance machine by the addition of ferrite magnets, and avoids problems of irreversible demagnetization of a rotor using only ferrite magnets. Additionally, the multi-barrier design results in a higher reluctance torque than a conventional permanent magnet machine. The use of ferrite magnets with rare-earth assistant magnets extending at an angle to the sides of the ferrite magnets provides a rotor with a viable torque density at an affordable investment cost and helps to reduce the environmental impact related to the mining and use of rare earth magnets.

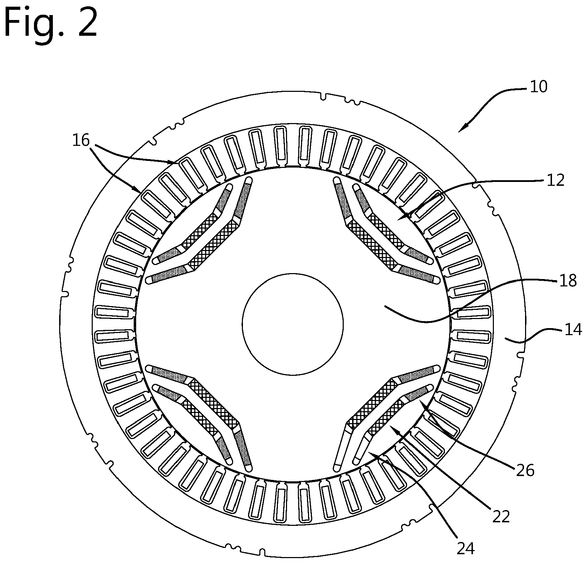

FIG. 2 is cross-sectional view of a second embodiment of a schematic electric machine 10. Electric machine 10 of Fig. 2 operates and has the same parts as that of the machine shown and described in relation to Figs. 1A-1B. The only difference is that each pole 12 consists of only two flux barriers 20, each consisting of a central ferrite magnet 22 and outer rare-earth element magnets 24, 26. In other rotors 18, poles 12 could have more flux barriers, for example, 4-6, with each consisting of a central thicker ferrite magnet 22 and smaller rare earth magnets 24, 26.

Though each of the flux barriers shown include a central ferrite magnet and two side rare earth magnets, in some embodiments, a flux barrier of a single type of magnet, for example, only ferrite magnets, could be used in addition. Such a flux barrier could be arranged in a pole, either adjacent to or between flux barriers shown, for example in place of rare earth magnets 24c, 26c in the machine shown in Figs. 1A-1B. This could provide additional magnetic force while maintaining reasonable costs.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular or preferred embodiments disclosed, but that the invention will include all embodiments falling within the scope of the appended claims.

## Claims

1. An electric machine (10) for a vehicle comprising:
a stator (14), and
a rotor (18) comprising a plurality of poles (12), where each pole comprises:
a first flux barrier (20); and
a second flux barrier (20) adjacent to and radially outward from the first flux barrier (20);
each of the first flux barrier (20) and the second flux barrier (20) comprising a central ferrite magnet (22) in a central duct (23), and first and second rare earth magnets (24, 26) on each side of the ferrite magnet (22) in outer ducts (25, 27) extending from each end of the central duct (23) at an angle.

2. The electric machine (10) of claim 1, wherein the first and second rare earth magnets (24, 26) are neodymium-iron-boron (NdFeB) magnets and/or samarium-cobalt (SmCo) magnets.

3. The electric machine (10) of any of the preceding claims, wherein the central ferrite magnet (22) and the first and second rare earth magnets (24, 26) have the same demagnetization point.

4. The electric machine (10) of any of the preceding claims, each of the central ferrite magnet (22) and first and second rare earth magnets (24, 26) is a rectangular prism.

5. The electric machine (10) of any of the preceding claims, wherein each duct (23, 25, 27) has a substantially rectangular cross-section in the rotor.

6. The electric machine (10) of any of the preceding claims, wherein outer ducts (25, 27) for the rare earth magnets (24, 26) connect with the central duct (23) for the central ferrite magnet (22).

7. The electric machine (10) of claim 6, wherein the outer ducts (25, 27) are symmetric along a centreline running perpendicular to the central duct (23).

8. The electric machine (10) of any of the preceding claims, wherein the central ferrite magnet (22) is thicker than the rare earth magnets (24, 26).

9. The electric machine (10) of any of the preceding claims, and further comprising a third flux barrier (20) adjacent to a radially outward from the second flux barrier, the third flux barrier comprising a central ferrite magnet (22) in a central duct (23), and first and second rare earth magnets (24, 26) on each side of the central ferrite magnet (22) in outer ducts (25, 27) extending from each end of the central duct (23) at an angle.

10. The electric machine (10) of claim 9, and further comprising a fourth flux barrier (20) adjacent to a radially outward from the third flux barrier, the fourth flux barrier comprising a central ferrite magnet (22) in a central duct (23), and first and second rare earth magnets (24, 26) on each side of the central ferrite magnet (22) in outer ducts (25, 27) extending from each end of the central duct (23) at an angle.

11. The electric machine (10) of any of the preceding claims, and further comprising a flux barrier (20) comprising only one type of magnet.

12. A method of forming an electric machine (10), the method comprising:
forming a rotor (18) with a central duct (23) and two outer ducts (25, 27) connecting to and extending radially outward from the ends of the central duct (23) at an angle toward an outer circumference of the rotor (18), each of the central and outer ducts having a rectangular cross-section;
inserting a ferrite magnet (22) in the central duct (23); and
inserting rare earth magnets (24, 26) in each of the outer ducts (25, 27).

13. The method of claim 12, wherein the step of forming a rotor (18) with a central duct (23) and two outer ducts (25, 27) comprises forming the central duct (23) thicker than the two outer ducts (25, 27).

14. The method of any of the preceding claims, and further comprising forming, radially outward from the central duct (23) and two outer ducts (25, 27), a second central duct (23) and two second outer ducts (25, 27) connecting to and extending radially outward from the ends of the second central duct at an angle toward an outer circumference of the rotor, each of the second central and second outer ducts having a rectangular cross-section;
inserting a second ferrite magnet (22) in the second central duct (23); and
inserting second rare earth magnets (24, 26) in each of the second outer ducts (25, 27).
